# FASCICULE DE BREVET EUROPEEN

(11) **EP 3 274 273 B1**
(45) Date de publication et mention de la délivrance du brevet: **15.05.2019**
(21) Numéro de dépôt: 16718411.8
(22) Date de dépôt: 24.03.2016
(51) Int. Cl.: B65D 88/12, B65D 90/00, B65D 90/22

(54) **CONTENEUR INTERMODAL LIMITANT LES POLLUTIONS DE L'ENVIRONNEMENT**
INTERMODALER BEHÄLTER ZUR REDUZIERUNG DER VERSCHMUTZUNG DER UMWELT
INTERMODAL CONTAINER REDUCING THE POLLUTION OF THE ENVIRONMENT

(30) Priorité: 25.03.2015 FR 1552496
(43) Date de publication de la demande: 31.01.2018
(73) Titulaire: Numa-Beaujour, Sylvia, 92300 Levallois-Perret (FR)
(72) Inventeur: Numa-Beaujour, Sylvia, 92300 Levallois-Perret (FR)
(74) Mandataire: IP Trust
(86) Numéro de dépôt international: PCT/FR2016/050667
(87) Numéro de publication internationale: WO 2016/151258

(56) Documents cités:
- BE-A- 731 710
- FR-A1- 2 649 682
- GB-A- 2 089 325
- NL-A- 9 401 027
- US-A- 4 762 231

## Description

### Domaine technique de l'invention

La présente invention a pour objet un conteneur intermodal de stockage et de transport de produits solides emballés ou en vrac sec.

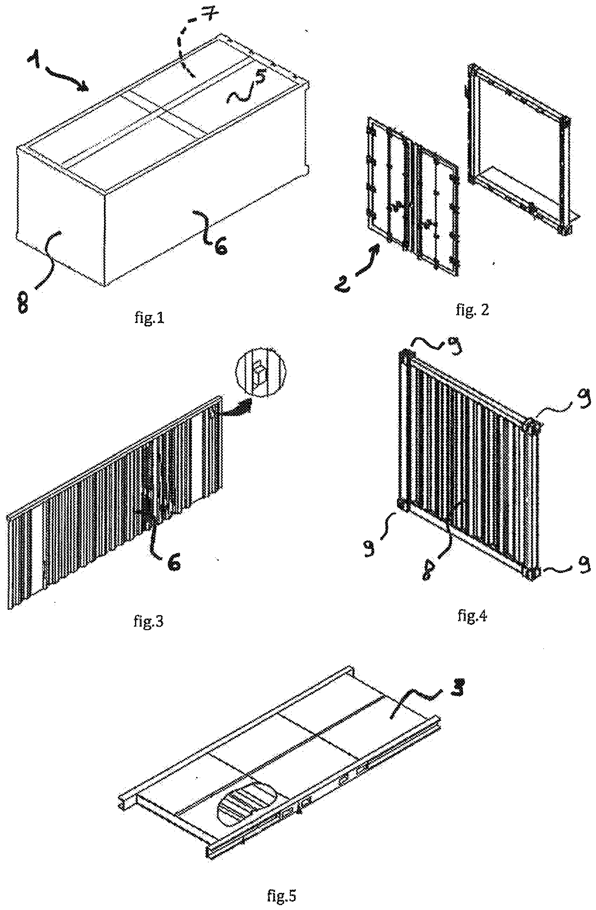

Le conteneur intermodal est un caisson (de préférence un parallélépipède), généralement en acier, pourvu d'un plancher interne en bois, standardisé, utilisé pour le stockage et le transport de marchandises et réutilisable par exemple comme habitat (voir figures 1 à 5).

Le système de transport intermodal de marchandises conteneurisées est mondial et permet une circulation sûre et efficace des marchandises.

Le terme «Intermodal» indique que le conteneur peut être déplacé d'un mode de transport à un autre (maritime, fluvial, ferroviaire, routier) sans rupture de charge c'est-à-dire sans décharger et recharger le contenu du conteneur.

Les conteneurs ont chacun une marque d'identification unique régie par la norme ISO 6346 ; leur longueur varie en général de 8 pieds (2,438 m) à 56 pieds (17,07 m) et leur hauteur de 8 pieds (2,438 m) à 9 pieds 6 pouces (2,9 m).

La capacité des conteneurs est souvent exprimée en unités équivalentes à vingt pieds (capacité égale à un standard de longueur de 6,10 m x largeur de 2,44 m).

Nous les appellerons par la suite les « conteneurs ISO » car ils doivent se conformer aux exigences ISO en vigueur au moment de leur fabrication ; par exemple en matière de transport afin de permettre le transport par camion, train, bateau et/ou barge. On pourra également se référer à la norme ISO 668:1995 (qui définit des conteneurs de 10, 20, 30 et 40 pieds).

En effet, le conteneur a été inventé en 1956 par Malcom McLean et il n'a quasiment jamais été modifié.

Le conteneur 20' pieds, le plus utilisé est entièrement hermétique et étanche à l'eau grâce des joints. Il est doté de parois rigides avec au moins une porte. Il est généralement utilisé pour transporter les marchandises solides, des graines ou des poudres qui n'ont pas besoin d'une température régulée. Les produits chimiques, les machines électroniques, les produits artisanaux, les médicaments, les produits du quotidien, les pièces d'instruments et de tissus peuvent également y être transportées. Nombre des produits manufacturés à haute valeur ajoutée actuels circulent en conteneur.

Le conteneur pour marchandises solides en acier inox est doté des avantages suivants :
- une haute résistance,
- une bonne résistance à la rouille et la corrosion,
- mais il nécessite un investissement important, c'est pourquoi il n'est pas courant.

Un container pour marchandises solides peut également être fait d'aluminium, selon deux types :
- L'un est le type à cadre en acier et plaques d'aluminium
- L'autre le type tout en aluminium avec seulement les extrémités du cadre en acier.

Dans ce cas il est léger, c'est souvent le cas de conteneurs utilisé dans le transport aérien. Il est doté d'une résistance supérieure à la rouille et d'une belle apparence ainsi que d'une bonne élasticité. D'un autre côté, il est cher à construire et manque de solidité.

Enfin, les plus communs sont en acier dit corten, un matériau résistant à la corrosion et facile à réparer.

Un conteneur traditionnel peut être à l'origine de différentes nuisances et contraintes :

### - Pollution maritime

Lors du naufrage d'un bateau transportant des conteneurs, les contenus de ceux ci, leurs revêtements/peintures de protection, peuvent se répandre en mer alors qu'ils peuvent être toxiques pour la faune et la flore maritime, leur simple présence en mer lorsqu'ils flottent, impliquer un danger de navigation et lorsqu'ils coulent et deviennent irrécupérables, provoquer des dommages à durée indéterminée pour la faune et la flore maritime,

### - Pollution terrestre

En raison d'une mauvaise répartition de la charge et/ou un surpoids des conteneurs, une remorque de camion peut être renversée sur l'autoroute, un wagon sur une voie ferrée, une pile de conteneurs chutant d'une barge fluviale ou d'un navire, dans un fleuve, provoquant non seulement des accidents mais également une pollution terrestre, fluviale et in fine maritime.

### - Un danger de santé pour les travailleurs, les consommateurs

Les gaz utilisés pour la fumigation c'est à dire pour détruire les organismes vivants nuisibles contenus dans le plancher en bois des conteneurs et/ou les produits transportés, sont particulièrement toxiques pour l'homme par inhalation (acide cyanhydrique, bromure de méthyle, hydrure de phosphore...) ou encore cancérigènes (bromométhane, benzène, ou 1-2-dichloréthane).

Or la fumigation apparaît indispensable pour éviter la propagation de nuisibles par le transport.

Or ces gaz de fumigation sont contenus parfois sans aucune indication de leur présence dans le conteneur si bien que de très nombreux salariés s'exposent à ces gaz toxiques sans aucune protection, sans aucune information préalable et sans s'en rendre compte.

En outre, ces gaz peuvent se mélanger à ceux libérés par les produits transportés et former des mélanges explosifs explosant sur ouverture du conteneur.
- la contrainte liée à l'entretien de ces conteneurs qui peut représenter parfois 1/3 du prix du conteneur (changement de plancher, peinture... soudure) pour être en mesure de garantir une bonne étanchéité malgré la vulnérabilité des joints d'étanchéité en caoutchouc vis à vis des embruns d'eau de mer) sans compter l'impact financier dû à son immobilisation. La durée de vie d'un conteneur même correctement entretenu n'excède toutefois pas les 10-15 ans.

### Etat de la technique et ses inconvénients

Pour résoudre le problème de pollution maritime, le brevet français FR 2 971 777 propose un conteneur transformable en structure flottante autonome qui facilite sa récupération en mer, l'accélère et évite ainsi à son contenu ou son revêtement de polluer. Ce conteneur peut être réalisé en matériau polymère ou composite, matériaux léger lui permettant de mieux flotter. Ce conteneur est constitué par un empilement de n caissons dont au moins un est central, les caissons étant reliés entre eux pour former lorsque déployés les uns vis à vis des autres, une structure rigide et flottante ayant une dimension longitudinale et/ou une dimension transversale supérieure à celles du conteneur dans sa position non déployée.

Cependant, cette solution de conteneur constitué de l'association de n caissons implique une compartimentation de son volume interne qui ne convient pas au transport de certains produits et ne résout pas les problèmes de danger pour la santé, et de danger lors du transport terrestre précité.

Pour résoudre le problème de la répartition de la charge au sein du conteneur, et éviter ainsi les dangers liés au transport terrestre de conteneurs, le document FR 3 005 938 propose un conteneur dont la longueur peut être modifiée entre une longueur maximale utilisée pour une charge maximale (par exemple lors d'un voyage aller de livraison) et une longueur minimale utilisée pour une charge minimale (par exemple lors du voyage retour alors que le conteneur a été vidé de la marchandise initiale qui a été remplacée par une autre moins volumineuse). Ce conteneur peut également être réalisé en matière plastique, ce qui facilite son entretien.

Si cette solution paraît relativement satisfaisante en terme de réduction des dangers liés au transport lui-même, elle est cependant tacite sur les problèmes liés à la santé des travailleurs et des consommateurs.

Par ailleurs, le document EP 1 179 978 propose un conteneur pour transport maritime dont le volume interne est scindé en une chambre de fumigation, dans laquelle sont disposés les produits à transporter et à fumer, et une chambre de contrôle de la fumigation. Une fois la fumigation effectuée, afin de diminuer la toxicité du volume interne du conteneur, les gaz sont épurés par un lit d'absorption au charbon actif avant d'être évacués vers l'atmosphère extérieure par un ventilateur. Cependant, la solution de rejeter dans l'atmosphère ces gaz même épurés n'est pas satisfaisante d'un point de vue environnemental (risque de saturation du filtre, de piètre épuration et de pollution). Enfin, le document GB 2 089 325 divulgue un dispositif formant conteneur, gerbable servant au transport de produits, comprenant une partie formant une caisse définissant une base et quatre parois latérales et une paroi supérieure, solidarisées les unes aux autres de façon étanche, une porte de fermeture étanche de la caisse, formant avec la caisse lorsque refermée sur celle ci, un caisson étanche, un système d'aspiration des gaz contenus dans le caisson fermé, et au moins une enveloppe étanche de stockage de gaz compressés, solidaire du caisson et formant boudin de calage lors du transport, la au moins une enveloppe étanche formant une bouée de flottaison lors d'une immersion du conteneur dans l'eau.

### Exposé de l'invention

L'invention vise à pallier ces inconvénients en proposant une solution conteneur permettant à la fois :
- une récupération aisée en mer, sécurisée y compris en cas de chute en mer
- une participation à la diminution des coûts fixes liés au transport (énergie) tous modes de transport confondu sans diminution de la vitesse commerciale
- une sécurisation du personnel manutentionnaire et de contrôle (et utilisateur final)
- sans aucune modification du conteneur en terme de dimensions et fonctionnalités de manutention et transport, afin de respecter les normes en vigueur.

Pour atteindre cet objectif, l'invention concerne un conteneur, gerbable, servant au transport de produits, comprenant :
- une partie formant une caisse définissant une base et quatre parois latérales et une paroi supérieure, solidarisées les unes aux autres de façon étanche, réalisée principalement en matériau plastique,
- une porte de fermeture étanche de la caisse, formant avec la caisse lorsque refermée sur celle ci, un caisson étanche,
- un système d'aspiration et de compression des gaz contenus dans le caisson fermé,
- au moins une enveloppe étanche de stockage des gaz aspirés et compressés, solidaire du caisson et formant boudin de calage lors du transport et bouée de flottaison lors d'une immersion du conteneur.

L'invention ainsi définie permet grâce aux éléments principaux ci-dessus, de présenter une structure relativement légère et d'entretien facile comparée à celles en acier, tout en garantissant une sécurité sanitaire du fait de l'aspiration des gaz du volume interne du caisson, un transport plus sûr du fait du calage des produits et une récupération facilitée en mer du fait de la relative légèreté du conteneur et de la présence de bouées de flottaison. L'invention présente par ailleurs l'une et/ou l'autre des caractéristiques additionnelles suivantes :
- le système d'aspiration et de compression des gaz contenus dans le caisson fermé est disposé à l'intérieur du caisson
- l'enveloppe étanche de stockage est fixée dans une zone du volume interne du caisson où ce sac une fois gonflé, est susceptible de servir de moyen de calage des produits transportés.
- l'enveloppe étanche de stockage est amoviblement fixée à l'intérieur du caisson
- le système d'aspiration et de compression des gaz comprend un analyseur des gaz aspirés par le système d'aspiration et de compression des gaz
- l'analyseur comprend une unité de comparaison des résultats d'analyse des gaz aspirés avec une base de données répertoriant les résultats d'analyse obtenus dans des conditions similaires en présence d'éléments témoins connus tels que des stupéfiants, et/ou une présence humaine
- la paroi de fond du caisson comprend un capteur de poids intégré
- la caisse du conteneur est obtenue par moulage
- La caisse est formée :
   - d'une seule pièce par moulage d'un matériau dans une forme parallélépipédique creuse ou
   - formée de l'assemblage de plusieurs parois/panneaux obtenues/s par moulage d'un matériau dans une forme à plat définissant entre les parois latérales et la base, des articulations étanches permettant une mise en volume, mise en volume sous la forme parallélépipédique puis fixation étanche des parois adjacentes non liées par une articulation étanche
- le caisson comprend au moins sur sa paroi supérieure un panneau solaire
- le conteneur comprend des pièces de coins permettant le gerbage du container, et/ou un capteur de poids tel qu'une jauge de contrainte, et/ou un système de branchement d'un panneau solaire, ces pièces ou ces jauges ou ce système de branchement étant comoulés ou surmoulés avec la caisse
- la porte est obtenue par moulage et les huisseries assurant son articulation sont comoulées ou surmoulées avec la porte
- le conteneur comprend une trappe externe d'accès au volume interne du caisson susceptible dans une position d'ouverture, d'autoriser l'entrée dans le volume interne d'un élément mobile de détection de présence de stupéfiant et/ou de présence humaine tel qu'un robot ou un petit animal
- les parois du caisson sont constituées de matériaux plastique ou de matériaux composite plastique métallique ou d'un écomatériau à base de matériau plastique
- le matériau plastique est formé d'un polymère de type polystyrène expansé ou en mousse, polyuréthane, polystyrène, résine époxy, polyéthylène de basse ou haute densité, polyéthylène de masse molaire très élevée UHMPE, sulfure de polyphénylène, PEEK, ou de type biopolymère
- le matériau constitutif des parois du caisson est renforcé par des fibres de verre, fibres de carbone, fibres de graphite par un tissu de verre tissé, un tissu de résine époxy, par du brome, traité anti-UV
- la base de la caisse est constituée de bois, ou de bois composite incluant une résine de plastique associée à des fibres de bois
- le caisson étanche comprend une armature métallique (52) formée de poutres et de traverses (53, 54, 55), sur lesquelles sont fixés des panneaux formant les parois du caisson étanche
- le caisson comprend des huisseries (51) d'articulation de la porte en matière métallique, céramique ou plastique rigide
- le caisson comprend des pièces de coin permettant l'arrimage dudit conteneur et/ou son empilage sur d'autres conteneurs en matière métallique, céramique ou plastique rigide
- l'enveloppe étanche (13) comprend une partie principale (81) délimitant un volume interne de stockage des produits et une partie secondaire (82) pourvue d'intercalaires de compartimentation (83) solidaires de la partie principale, et définissant ensemble des compartiments de stockage de produits fragiles
- les intercalaires sont constitués d'enveloppes étanches de stockage des gaz aspirés et compressés
- les intercalaires comprennent sur leurs faces internes délimitant un compartiment, une protection pour les produits fragiles, de type néoprène (84).

### Présentation des figures

D'autres données, caractéristiques et avantages de la présente invention apparaîtront à la lecture de la description non limitée qui suit, en référence aux figures annexées qui représentent un exemple non limitatif de réalisation de l'invention et parmi lesquelles :
- les figures 1 à 5 précitées représentent un conteneur selon l'état de la technique
- la figure 6 représente par une vue schématique de face côté ouverture, le conteneur selon l'invention sans enveloppe étanche de gaz,
- la figure 7 illustre par une vue analogue à la figure 6 le même conteneur avec enveloppes étanches de gaz gonflées par le gaz aspiré dans le volume interne du conteneur,
- la figure 8 représente une vue schématique en perspective du conteneur selon l'invention, avec arrachement du toit laissant entrevoir le système d'aspiration
- la figure 9 est un agrandissement de la figure 10 centré sur le système d'aspiration
- les figures 10 et 11 représentent par des vues schématiques en perspectives respectivement deux variantes d'armatures ou charpentes métalliques pouvant équiper le caisson du conteneur selon l'invention, et sur laquelle viennent se fixer les parois en matériaux plastiques du conteneur
- la figure 12 représente par une vue en perspectives les différents éléments métalliques, céramiques ou plastiques d'une huisserie d'articulation de la porte de fermeture du caisson du conteneur selon l'invention,
- les figures 13 à 15 représentent respectivement par des vues en perspective, vue de côté et vue de dessus, une paroi du caisson du conteneur selon l'invention selon une première variante de réalisation
- les figures 16 et 17 illustrent par des vues en perspectives une paroi du caisson du conteneur selon l'invention selon une deuxième variante de réalisation avec alvéoles internes
- la figure 18 représente une variante de réalisation de l'enveloppe étanche de stockage des gaz aspirés selon laquelle le volume interne du conteneur est compartimenté pour protéger individuellement les produits transportés lorsque ceux ci sont fragiles.

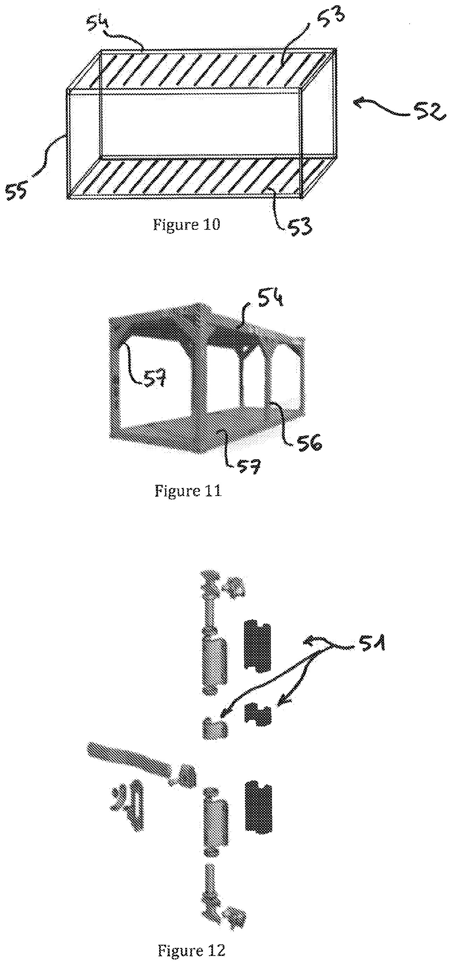

Conformément à la figure 10, l'invention concerne un conteneur ISO tel que défini ci-dessus, comprenant une caisse principale sensiblement parallélépipédique 1 refermée par une porte 2, la caisse définissant une paroi de fond 3 de support des produits à transporter 4, deux parois latérales 6, 7 incluant des aérations (encart circulaire de la figure 3), une paroi supérieure 5 et une paroi 8 opposée à une ouverture refermée par la porte 2. Lorsque refermée par la porte 2, la caisse 1 forme un caisson de conteneur 12.

Le conteneur comprend en outre des pièces de coin 9 (notamment visibles sur la figure 4) permettant l'arrimage du dit conteneur et/ou son empilage sur d'autres conteneurs (et vice et versa) de manière conventionnelle et conformément aux normes relatives aux conteneurs existantes et en vigueur au moment de leur fabrication (par exemple la norme ISO 668 :1995 ; et, en particulier, son annexe A). Il comporte ainsi au moins quatre pièces de coin 9 sur sa face supérieure, et/ou sur sa face inférieure.

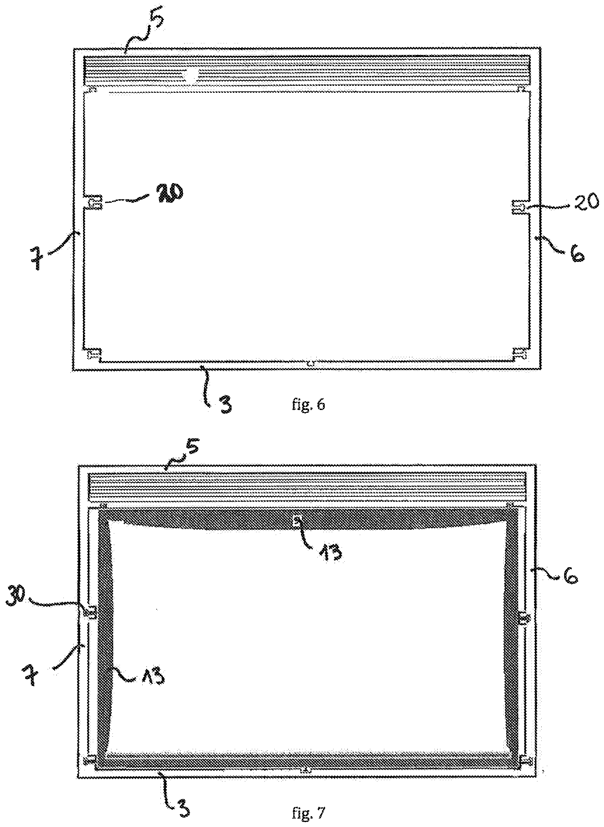

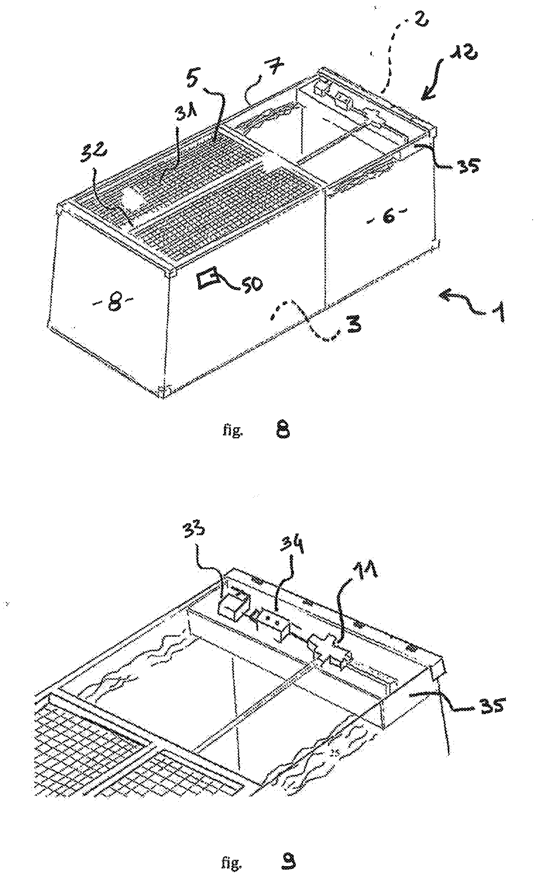

Pour garantir à un conteneur de ce type une structure relativement légère, d'entretien facile comparée à celles en acier, une sécurité sanitaire vis à vis des gaz de fumigation, un transport plus sûr et une récupération facilitée en mer, tout en garantissant la solidité requise, le conteneur selon l'invention comporte une caisse dont les parois sont solidarisées les unes aux autres de façon étanche, et principalement réalisée en matière plastique, et comprend en outre comme visible sur les figures 6 à 11:
- un système d'aspiration et de compression des gaz 11 contenus dans le caisson fermé, incluant
- des moyens d'acheminement des gaz aspirés et comprimés vers
- des enveloppes étanches de stockage des gaz aspirés et compressés 13, solidaires du caisson et formant des boudins de calage des produits lors du transport et des bouées de flottaison lors d'une immersion du conteneur dans l'eau.

Telles que représentées, ces enveloppes 13 présentent dans l'état dégonflé (non représenté) une forme de sachet dégonflé, et dans l'état déployé représenté figure 7, celui de coussins s'étendant le long d'au moins une parois interne du caisson (les parois latérales, supérieure et inférieure (sous un faux plancher) dans l'exemple illustré) du conteneur. Ces enveloppes sont en fait fixées dans une zone lui permettant de caler au mieux les produits transportés sans empiéter outre mesure sur le volume interne du caisson. On définira par exemple sur la paroi de fond 3 du conteneur des zones où disposer les produits et des zones à nécessairement laisser libres puisqu'elles accueilleront les sacs une fois gonflés. L'enveloppe est constituée d'un tissu technique gonflable à couture étanche qui peut être démonté du conteneur. Des encoches 20 par exemple en forme de T en section transversale sont prévues sur les parois internes du conteneur destinées à être pourvues d'enveloppes et les enveloppes comprennent des pattes 30 venant s'engager fixement dans ces encoches 20.

Dans l'exemple représenté, le système d'aspiration et de compression des gaz 11 et/ou l'enveloppe étanche de stockage des gaz sont tous deux disposés à l'intérieur du caisson. Ce système peut être un venturi 11 ou remplacé par un autre dispositif tel qu'un système adapté de réfrigération ou une machine à vide agroalimentaire avec réinjection de gaz.

De préférence, un analyseur des gaz aspirés comprenant une sonde 91 de captation de ces gaz (représentée sur la figure 7) peut être prévue initialement à l'intérieur de l'enveloppe et/ou du conduit d'aspiration des gaz, avec un branchement accessible depuis l'extérieur du conteneur (par exemple depuis une trappe 50) auquel un opérateur pourrait connecter un terminal d'analyse (90) pour analyser les gaz et le respect des seuils préalablement à l'ouverture du conteneur.

Une variante de réalisation consiste à prévoir un orifice d'introduction de façon étanche d'une sonde rapportée, à l'intérieur de l'enveloppe et/ou du conduit d'aspiration des gaz permettant à un opérateur muni de cette sonde et du terminal d'analyse associé, d'analyser les gaz et le respect des seuils préalablement à l'ouverture du conteneur.

Différentes techniques d'analyse des gaz sont particulièrement adaptées :
- la thermodésorption
- l'analyse chromatographique gazeuse, éventuellement couplée à la spectrométrie de masse GC-MS.

L'enveloppe étanche de stockage est idéalement amoviblement fixée à l'intérieur du caisson afin de pouvoir être extraite du caisson en vue de son nettoyage.

Le système d'aspiration et de compression des gaz peut être activé après une fumigation et/ou juste après la fermeture de la porte en vue du transport du conteneur afin de s'assurer que ces gaz de fumigation et tout autre gaz libérés par les produits, soient piégés dans les boudins ou coussins 13.

Idéalement, les gaz aspirés pourront être analysés par un analyseur et les résultats d'analyse pourront être accessibles depuis ou transmis à l'extérieur du conteneur.

Un orifice refermable pourra être prévu sur chaque enveloppe étanche pour vider leur contenu, cet orifice pouvant servir de branchement à un tuyau de récupération de ces gaz en vue de leur évacuation vers l'extérieur si ces gaz sont inoffensifs, ou de leur stockage/récupération/traitement s'ils sont viciés.

Cet analyseur pourra comprendre en outre une unité de comparaison des résultats d'analyse des gaz aspirés avec une base de données répertoriant les résultats d'analyse obtenus dans des conditions similaires (volume interne identique, présence d'un même nombre de boudins) en présence d'éléments témoins tels que des stupéfiants, et/ou une présence humaine, et envoyant un message d'alerte lorsque la comparaison tend à prouver la présence de stupéfiants ou de personnes ou animaux à l'intérieur du conteneur.

Des éléments techniques intéressants tels que des panneaux solaires 14 schématiquement représentés, pourront équiper le conteneur. Ainsi, à l'extérieur du conteneur (figure 10) pourront se trouver des cellules photovoltaïques 31 enserrée par un cadre phosphorescent 32. Elles sont reliées à des éléments assurant l'alimentation des appareils de mesure (capteurs, jauge, interrupteur porte et alarme) : un système doté d'un onduleur 33 (figure 11) et d'une batterie 34 (fig. 11) enfermés dans un coffre 35 disposé à l'intérieur du conteneur par exemple à proximité du plafond côté ouverture.

Avantageusement, les panneaux solaires pourront être intégrés dans l'épaisseur de la paroi supérieure du conteneur, et/ou de ses parois latérales.

Le type de panneau solaire particulièrement adapté est le panneau solaire à batterie au lithium.

Idéalement, ces panneaux solaires pourront être reliés via des câbles et branchements appropriés à un système de branchement, par exemple accessible par la trappe 50 pour alimenter en énergie électrique tout type d'équipement, notamment le véhicule ou bateau qui les transporte.

D'autres éléments techniques intéressants peuvent comprendre des capteurs de poids ou jauges de contraintes 92, répartis par exemple à l'intérieur du plancher (figure 5), avec un branchement accessible depuis l'extérieur du conteneur (par exemple depuis une trappe 50) auquel un opérateur pourrait connecter un terminal d'analyse (90) pour obtenir un poids global de produits transportés pour vérifier la conformité du poids indiqué avant le transport, notamment maritime. Si le plancher est constitué de plusieurs plaques assemblées munies chacune d'un capteur, il est possible d'obtenir une répartition du poids des produits transportés, pour optimiser leur répartition sur le plancher notamment pour le transport terrestre routier.

Une variante de réalisation consiste à prévoir un orifice d'introduction de façon étanche d'une sonde rapportée, à l'intérieur de l'enveloppe et/ou du conduit d'aspiration des gaz permettant à un opérateur muni de cette sonde et du terminal d'analyse associé, d'analyser les gaz et le respect des seuils préalablement à l'ouverture du conteneur.

Etant donné que la caisse 1 et la porte 2 sont constituées de plastiques résistant mécaniquement (idéalement du PET et présentant une épaisseur permettant d'atteindre des performances techniques requises), la caisse peut avantageusement être obtenue par moulage :
- directement en une pièce dans sa forme parallélépipédique (sans la porte) ou
- par moulage dans une forme à plat définissant entre les parois latérales et la base, des articulations étanches (moindre épaisseur de matériau plastique par exemple) permettant une mise en volume, puis mise en volume sous la forme parallélépipédique puis fixation étanche des parois adjacentes non liées par une articulation étanche. Par ce mode de réalisation, la porte peut être formée d'une pièce avec la caisse.

Dans le cas de ce moulage, les pièces de coins 9 permettant le gerbage du container, et/ou un capteur de poids tel qu'une jauge de contrainte, et/ou le système de branchement d'un panneau solaire, peuvent être comoulés ou surmoulés avec la caisse.

De même, les huisseries d'ouverture et de fermeture de la porte (huisseries idéalement en céramique) seront comoulées ou surmoulées avec la porte.

Pour autoriser l'entrée dans le volume interne d'un élément mobile de détection de présence de stupéfiant et/ou de présence humaine tel qu'un robot ou un petit animal, ou des dispositifs de contrôle, le conteneur peut en outre comprendre une trappe externe 50 (figure 10) d'accès au volume interne du caisson susceptible dans une position d'ouverture, de laisser passer l'élément mobile, et, dans une position de fermeture, d'assurer l'étanchéité du volume interne. Cette trappe d'une cinquantaine de centimètres est accessible par la paroi latérale du conteneur. Elle s'ouvre via une clé -interrupteur qui déclenche lorsqu'introduite dans l'interrupteur, une alarme (par exemple sonore) pour éviter les tentatives de vols. Seules les personnels de contrôle étant habilitées à l'utiliser.

### Structure générale du caisson

1) Le caisson du conteneur selon l'invention peut être principalement constitué de matériau plastique en ce sens qu'il peut être constitué par l'assemblage de parois en matière plastique ou plastique renforcé de fibres ou autres éléments, autoportante et rigide et dans une moindre mesure de pièces autres que plastiques par exemple métalliques (ou céramique) telles que les pièces de coin 9 ou les éléments d'huisserie tels que représentées sur la figure 12.
   Dans ce cas, il est possible que la caisse (parois latérales hors porte de fermeture et paroi opposée à la porte et éventuellement la base 3) soit :
   - formée d'une seule pièce par moulage d'un matériau thermoplastique dans une forme parallélépipédique creuse ou
   - formée de l'assemblage de plusieurs parois obtenues par moulage d'un matériau thermoplastique dans une forme à plat définissant entre les parois latérales et la base, des articulations étanches permettant une mise en volume, puis mise en volume sous la forme parallélépipédique, avec une fixation étanche des parois adjacentes non liées par une articulation étanche.
2) Selon la variante de réalisation illustrée sur les figures 10 et 11, la caisse est au contraire constituée d'un matériau composite incluant une armature ou charpente métallique 52 composée de poutres 54 et montants 55 formant des cadres délimitant un parallélépipède et de traverses 53 reliant les deux poutres les plus longues au niveau de la base 3 et de la paroi supérieure 5, la figure 11 représentant une variante dans laquelle l'armature comprend en outre des montants centraux 56 et des poutrelles de support 57 faisant un angle entre une poutre et un montant.

Des parois latérales, supérieure et une paroi formant la porte, réalisées en matériau plastique ou en matériau composite à base de matière plastique viendront compléter cette armature pour former le caisson.

Un plancher 57 sera supporté par les traverses inférieures et pourra être constitué de bois, ou de bois composite matériau incluant une résine de plastique associée à des fibres de bois.

Du néoprène pourra être utilisé pour les jointures entre les différents éléments.

### Types de matériaux plastiques possibles

Que la caisse et la porte la refermant soit pourvue ou non d'une armature, de renforts et/ou de huisseries métalliques, les parois ou panneau la constituant seront principalement constitués de plastique (dans une teneur massique de plus de 70% en poids, de préférence 80% en poids, de manière encore préférée 90% en poids) et composés de :
- matériaux plastique ou d'un écomatériau à base de matériau plastique.
- le matériau plastique peut être formé d'un polymère de type polystyrène expansé ou en mousse, polyuréthane, polystyrène, résine époxy, polyéthylène de basse ou haute densité, polyéthylène de masse molaire très élevée UHMPE, sulfure de polyphénylène, PEEK, ou de type biopolymère
- le matériau constitutif des parois du caisson peut être renforcé par des fibres de verre, fibres de carbone, fibres de graphite par un tissu de verre tissé, un tissu de résine époxy, par du brome, traité anti-UV

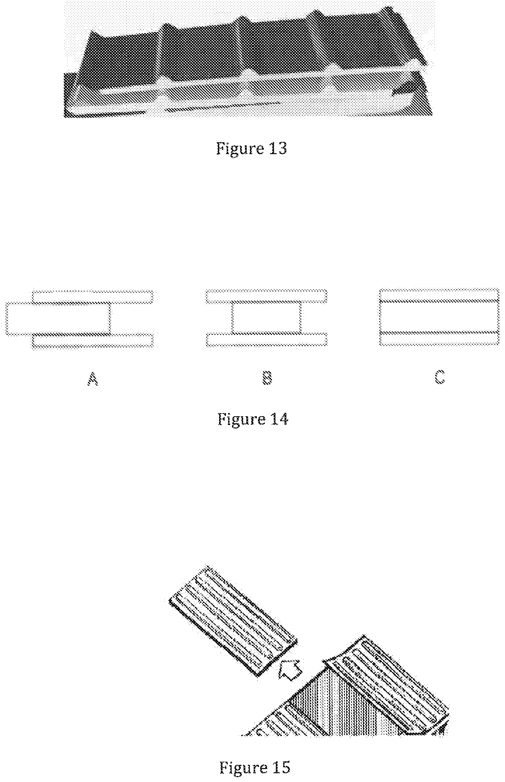

Dans les exemples représentés sur les figures 13 à 15, le matériau plastique constitutif d'une paroi du conteneur comprend une structure sandwich 60.

Conformément à la figure 13, cette structure comprend une couche interne d'isolation notamment thermique 61, par exemple de matériau EPS Polystyrène expansé ou en mousse interposée entre deux plaques 62 assurant la rigidité du panneau, par exemple de type PU ou polyuréthane XPS ou PS (polystyrène).

Le plastique expansé de la couche interne comprend avantageusement deux parties en plastique expansé moulé, une partie inférieure comportant des alvéoles, et une partie supérieure recouvrant la partie inférieure et s'encastrant dans celle-ci.

Les plaques externes peuvent être également constituées d'un panneau en fibre de verre FRP traité anti-UV, d'une épaisseur de 50 à 100 mm.

L'épaisseur totale du panneau utilisé peut être comprise entre 40-350 mm en fonction du degré d'isolation thermique exigé et/ou du conditionnement des produits transportés et/ou du volume interne du conteneur désiré.

Deux panneaux successifs seront assemblés côte à côte et fixés deux à deux avec interposition de joints étanches et/ou de joints de dilatation.

Conformément à la figure 14A, l'agencement des plaques rigides 62 et de la couche intermédiaire isolante 61 peut avantageusement permettre un emboîtement latéral de deux panneaux adjacents 60 de ce type, la couche interne 61 dépassant d'un côté latéralement vis à vis des bords latéraux des plaques rigides et laissant de l'autre côté un espace 63 d'accueil de la partie proéminente de la couche interne 61 d'un panneau adjacent. Deux panneaux adjacents sont alors assemblés par les bords de la partie proéminente de la couche interne sur les plaques rigides du panneau adjacent par exemple par collage ou contre-collage.

Au contraire, conformément à la figure 14B, la couche interne 61 peut être plus courte que les plaques rigides 62. Deux panneaux adjacents sont alors assemblés par les bords en contact des plaques rigides 62 par exemple par collage ou contre-collage.

La proposition illustrée sur la figure 14C comprend une couche interne 61 et des plaques rigides 62 de même largeur, et le panneau en résultant est fixé par son bord à un panneau adjacent du même type, par exemple par collage ou contre-collage.

Deux panneaux successifs seront assemblés côte à côte et fixés deux à deux avec interposition de joints étanches et/ou de joints de dilatation.

La figure 15 illustre un emboîtement possible de panneaux juxtaposés pour former un conteneur.

Ce panneau est généralement préfabriqué, et présente 40-350mm d'épaisseur.

Ce matériau forme un isolant thermique respectant la norme ISO2009 :2008. L'avantage est une facile mécanisation du montage en faisant en sorte que les pièces s'assemblent facilement.

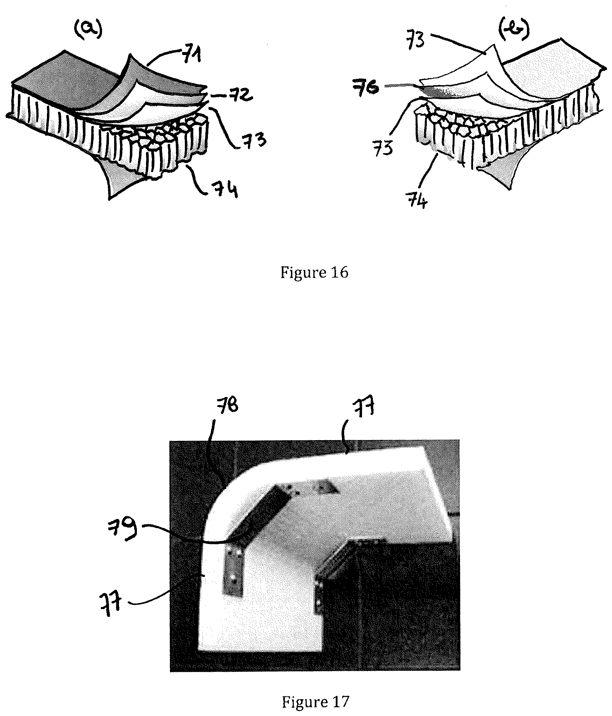

Dans les exemples représentés sur les figures 16 à 17, le matériau plastique constitutif d'une paroi du conteneur comprend un panneau de type FRP ou Plastique renforcé par fibres :
Figure 16(a) : Une structure sandwich et en nid d'abeille constituée d'une feuille de plastique renforcée par des fibres de verre 71, d'un tissu non tissé 72, d'une feuille de polypropylène 73, d'une structure en nid d'abeille en polypropylène 74
Figure 16(b) : Une structure sandwich et en nid d'abeille constituée successivement d'une feuille de polypropylène (PP) 73, d'un tissu tissé en PP 76 ou une couche de fibre de verre, d'une feuille de polypropylène (PP) 73 et d'une structure en nid d'abeille en polypropylène 74

Le FRP ou Plastique renforcé par fibres de verre traité anti-UV de type :
* FRP-4, FR-4. C'est un composite de résine époxy renforcé de fibre de verre. Ses propriétés peuvent varier selon les directions de sa structure (parallèle ou perpendiculaire aux fibres).
* FR-4 ESD Ce matériau offre une résistance mécanique élevée à la température ambiante.
* FRP-007
* FRP avec gel couché ou non.

Conformément à la figure 17, ce matériau peut être mis en forme et plié de façon à définir deux parois adjacentes perpendiculaires 77 et une portion intermédiaire en angle 78 et est ainsi tout à fait adapté pour former la caisse du conteneur selon l'invention. Des renforts métalliques 79 pourront être rapportés pour maintenir les parois dans leur position perpendiculaire l'une à l'autre.

Il est possible de recourir à d'autres types de plastiques :

### - Le Polyéthylène PE de basse PELD ou haute densité PEHD.

Préférentiellement, on utilisera notamment le polyéthylène de haute densité, traité contre les effets d'un environnement alcalin.

On peut y ajouter un tissu de verre tissé, un tissu de résine époxy et/ou du brome. Il peut aussi être extrudé ou stress soulagé.

On peut opter pour produit rotomoulé en polyéthylène car imputrescible et insensible à la corrosion. Ils sont teintés dans la masse et ne craignent ni chocs ni rayures.

Ils résistent aux solvants et aux hydrocarbures. Ces produits peuvent être faits sur commande afin de répondre à la norme militaire MIL-STD 810G (résistance environnementale).

On peut aussi opter pour un PEHD issu du thermoformage car il est aussi résistant aux huiles, solvants et hydrocarbures mais aussi hydrofuge, résistant aux produits chimiques, à l'abrasion et à l'usure. Il offre aussi une excellente résistance aux chocs, son poids est léger, il a une faible absorption d'humidité, et une résistance élevée à la traction. PEHD est également non toxique et non-coloré.

Il peut être préconisé l'utilisation du polyéthylène de masse molaire très élevée UHMPE.

### - Le sulfure de polyphénylène PPS

Il offre de très bonnes propriétés d'isolation électrique, une bonne dureté et rigidité, très haute résistance à la déformation thermique élevée, aux effets climatiques et aux agents chimiques. A privilégier pour des usages civils très particuliers par exemple pour la Route Nord-Ouest.

### - Le Polyétheréthercétone PEEK

Le PEEK auquel on ajoute notamment des fibres de verres afin de réduire le taux d'expansion et d'augmenter le module de flexion. On peut ajouter au PEEK des fibres de carbones et de graphite afin d'en faire un polytétrafluoréthylène PTFE. A privilégier pour des applications très spécifiques, par exemple des demandes émanant de l'armé (matériel blindé).

### - Les écomatériaux ou bioplastiques :

Par exemple de la gamme de plastique ECOGEHR® biodégradables
PLA-L, soit tout Bio-polymère à base de matières premières renouvelables peuvent être utilisés.

Le polypropylène recyclable obtenu par injection, soufflage et structure en creux est une alternative écologique intéressante.

Il permet d'obtenir des objets au cadre renforcé via une structure en nid d'abeilles qui assure une certaine stabilité au produit et lui permet de contenir des objets lourds tels que pièces mécaniques ou de l'outillage.

### Structure de l'enveloppe étanche

L'enveloppe gonflable a pour but de caler la marchandise afin qu'elle ne bouge pas durant le transport. Certains produits, sont susceptibles de déchirer cette enveloppe si cette dernière n'est pas assez robuste. Ces cas de détérioration anticipés peuvent survenir lors du processus de gonflage lui-même ou lors d'éventuels situations de compression de la marchandise. Or, si la marchandise n'est pas bien calée, elle peut bouger et endommager l'ensemble de la structure.

Le processus de gonflage-calage est donc essentiel. Il est assuré par un système électromécanique d'aspiration de l'air ambiant dans lequel se situe la marchandise enfermée. L'air transvasé dans l'enveloppe doit bloquer par une compression plus ou moins importante la marchandise jusqu'à sa libération au point de livraison ou d'un contrôle douanier.

Parmi les tissus les plus satisfaisants, figure le PVC de préférence ignifugé, éventuellement traité anti-UV et de préférence enduit auquel on peut selon les cas ajouter une épaisseur interne de protection des produits, par exemple en néoprène (caoutchouc à base de polychloroprène) afin d'assurer une meilleure protection de l'enveloppe par absorption des chocs.

Un autre tissu intéressant est un tissu matelassé multicouches, assemblées par des coutures ou soudures techniques, et étanches, en vue d'assurer une excellente isolation technique et pour résister à l'abrasion.

Si le tissu est utilisé sous la forme de panneaux de tissus, ceux ci seront assemblés par des coutures ou soudures techniques couplées à des joints d'étanchéité et de dilatation.

Par ailleurs, ce matériau présente des qualités de type : légèreté, d'isolation thermique, d'élasticité et de résistance à l'écrasement et à la dégradation. Il s'agit donc d'un tissu dit technique ignifugé mais pas forcément traité anti-UV compte tenu de sa position à l'intérieur du conteneur. On peut éventuellement envisager une enduction de polyuréthane PU. Il doit répondre à des normes spécifiques en termes de contexture, d'ouverture de mailles, de résistance à la rupture, d'élasticité, d'armure, de perméabilité de l'air, d'épaisseur, de taux de matières extractibles et de poids. Exemple de normes en vigueur ce jour NF EN 1049 / NF G07-155, NF EN ISO 13934-1 /NF G07-001, NF G07-111, NF EN ISO 9237, ASTMD2257, ISO 3801 / NF G07-150 / NF EN ISO 5084/ NF-G07-153.

Afin d'assurer une meilleure circulation de l'air et éviter notamment la formation d'une poche où s'installerait une source d'humidité mais également l'écrasement possible de certains produits lors du processus d'aspiration il est possible d'insérer un intercalaire souple et déformable solidaire de l'enveloppe pour des éléments fragiles à l'intérieur même de la structure gonflable.

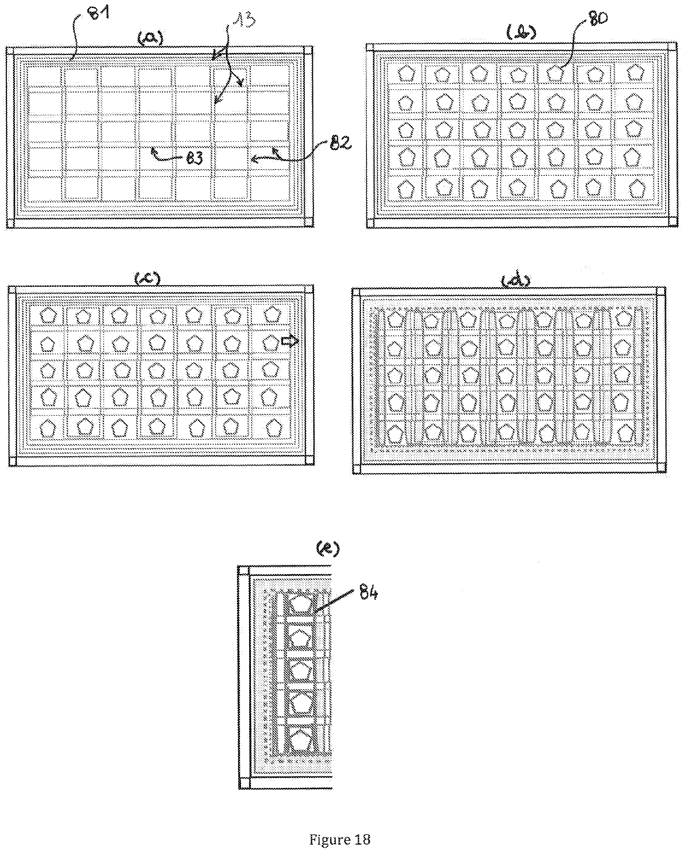

Ainsi, conformément à la figure 18, selon une variante de réalisation de l'enveloppe étanche de stockage des gaz aspirés, celle-ci propose la possibilité de compartimenter le volume interne du conteneur, par des enveloppes secondaires gonflées aux gaz aspirés et compressés pour protéger individuellement les produits transportés lorsque ceux ci sont fragiles.

A cet effet, l'enveloppe étanche 13 comprend une partie principale 81 délimitant un volume interne de stockage des produits 80 et une partie secondaire 82 pourvue d'intercalaires de compartimentation 83 solidaires de la partie principale et en communication avec le système d'aspiration et de compression des gaz, soit via la partie principale 81 soit indépendamment de celle-ci.

La partie principale 81 peut être constituée de toiles rectangulaires dont les bords latéraux sont fixés de manière étanche sur la face interne de chaque paroi du caisson (y compris la porte) et la partie secondaire 82 peut être constituée d'un ou de plusieurs boudins solidaires les uns des autres. Par exemple, ces boudins peuvent définir vus de haut, plusieurs galeries (3 sur la figure 18(a)) à profil rectangulaire espacées les unes des autres, et perpendiculairement à celles-ci, des boudins rectilignes disposés perpendiculairement aux bords longs des galeries, et pourvus de fentes de passage des parois des galeries. La hauteur des parois des galeries et des boudins sera adaptée à celle des produits (figure 18b). Les galeries et boudins pourront être fixés à la toile de la partie principale, et éventuellement en communication de flux d'air avec celle ci ou directement avec le système d'aspiration et de compression de gaz afin d'être gonflés (figure 18 d)) lorsque l'air interne du conteneur est aspiré (figure 18 c).

Idéalement, les intercalaires comprennent sur leurs faces internes délimitant un compartiment, une protection pour les produits fragiles, de type néoprène 84.

Dans certains cas, sur demande une protection supplémentaire peut-être installée.

Ce dispositif de décompression doit être conçu de façon à empêcher l'entrée de tout corps étranger, les fuites de gaz et tout excès dangereux de pression.

Les fermetures des orifices destinés à l'entrée et à l'évacuation de l'air contenu dans l'enveloppe doivent être conçues et réalisées de manière à rester fermées et étanches dans les conditions normales de transport. Les fermetures doivent être pourvues de joints ou d'autres éléments d'étanchéité, à moins qu'elles ne soient étanches de par leur conception même.

Enfin, en aucun cas, le chargeur ne doit remplir le conteneur de produit notoirement inflammable sans en informer toutes les personnes qui seront amenées à manipuler le dit conteneur.

Selon une mode de réalisation avantageux, le conteneur peut inclure des éléments de géolocalisation tels que des balises GPS alimentés en énergie grâce à la production d'énergie autonome. (système plug and play notamment).

L'invention n'est pas limitée aux conteneurs intermodaux de type ISO tel que défini ci-dessus, mais concerne tous types de conteneurs de stockage et/ou de transport de produits à caler et dont les gaz contenus dans le volume interne défini par le conteneur, doivent préférablement être aspirés pour éviter tout risque sanitaire et/ou d'explosion.

## Revendications

1. Dispositif formant conteneur, gerbable servant au transport de produits, comprenant :
- une partie formant une caisse (1) définissant une base (3) et quatre parois latérales (6, 8) et une paroi supérieure, solidarisées les unes aux autres de façon étanche, réalisée principalement en matériau plastique,
- une porte de fermeture étanche (2) de la caisse, formant avec la caisse lorsque refermée sur celle ci, un caisson étanche,
- un système d'aspiration et de compression (11) des gaz contenus dans le caisson fermé,
- au moins une enveloppe étanche (13) de stockage des gaz aspirés et compressés, solidaire du caisson et formant boudin de calage lors du transport et bouée de flottaison lors d'une immersion du conteneur dans l'eau.

2. Dispositif selon la revendication 1, dans lequel le système d'aspiration et de compression (11) des gaz contenus dans le caisson fermé est disposé à l'intérieur du caisson.

3. Dispositif selon la revendication 1 ou la revendication 2, dans lequel l'enveloppe étanche (13) est fixée dans une zone du volume interne du caisson où cette enveloppe (13) une fois gonflée, est susceptible de servir de moyen de calage des produits transportés.

4. Dispositif selon l'une des revendications précédentes, dans lequel l'enveloppe étanche (13) est amoviblement fixée à l'intérieur du caisson.

5. Dispositif selon l'une des revendications précédentes, comprenant un analyseur des gaz aspirés (90) par le système d'aspiration et de compression (11) des gaz.

6. Dispositif selon la revendication 5, comprenant une unité de comparaison des résultats d'analyse (90) des gaz aspirés avec une base de données répertoriant les résultats d'analyse obtenus dans de conditions similaires pour des compositions de gaz relevés en présence d'éléments témoins connus tels que des stupéfiants, et/ou une présence humaine.

7. Dispositif selon l'une des revendications précédentes, dans lequel la paroi de fond (3) du caisson comprend une balance de précision intégrée (92).

8. Dispositif selon l'une des revendications précédentes, dans lequel la caisse est obtenue par moulage.

9. Dispositif selon la revendication 8, dans lequel la caisse est:
- formée d'une seule pièce par moulage d'un matériau dans une forme parallélépipédique creuse ou
- formée de l'assemblage de plusieurs parois obtenues par moulage d'un matériau dans une forme à plat définissant entre les parois latérales et la base, des articulations étanches permettant une mise en volume, mise en volume sous la forme parallélépipédique puis fixation étanche des parois adjacentes non liées par une articulation étanche

10. Dispositif selon la revendication 8 ou 9, dans lequel le caisson comprend au moins sur sa paroi supérieure un panneau solaire (14).

11. Dispositif selon l'une des revendications précédentes, comprenant des pièces de coins (9) permettant le gerbage du container, et/ou un capteur de poids (92) tel qu'une jauge de contrainte, et/ou un système de branchement d'un panneau solaire (93), ces pièces ou ces jauges ou ce système de branchement étant comoulés ou surmoulés avec la caisse.

12. Dispositif selon l'une des revendications précédentes, dans lequel la porte est obtenue par moulage et des huisseries (51) assurant l'articulation de la porte sont comoulées ou surmoulées avec la porte.

13. Dispositif selon l'une des revendications précédentes, comprenant une trappe externe (50) d'accès au volume interne du caisson.

14. Dispositif selon l'une des revendications précédentes, **caractérisé en ce que** les parois du caisson sont constituées de matériaux plastique ou de matériaux composite plastique métallique ou d'un écomatériau à base de matériau plastique.

15. Dispositif selon la revendication 14, **caractérisé en ce que** le matériau plastique est formé d'un polymère de type polystyrène expansé ou en mousse, polyuréthane, polystyrène, résine époxy, polyéthylène de basse ou haute densité, polyéthylène de masse molaire très élevée UHMPE, sulfure de polyphénylène, PEEK, ou de type biopolymère

16. Dispositif selon la revendication 14 ou 15 **caractérisé en ce que** le matériau constitutif des parois du caisson est renforcé par des fibres de verre, fibres de carbone, fibres de graphite par un tissu de verre tissé, un tissu de résine époxy, par du brome, traité anti-UV

17. Dispositif selon l'une des revendications précédentes, **caractérisé en ce que** la base de la caisse est constituée de bois, ou de bois composite incluant une résine de plastique associée à des fibres de bois.

18. Dispositif selon l'une des revendications précédentes, **caractérisé en ce que** le caisson étanche comprend une armature métallique (52) formée de poutres et de traverses (53, 54, 55), sur lesquelles sont fixés des panneaux formant les parois du caisson étanche

19. Dispositif selon l'une des revendications précédentes, **caractérisé en ce que** le caisson comprend des huisseries (51) d'articulation de la porte en matière métallique, céramique ou plastique rigide.

20. Dispositif selon l'une des revendications précédentes, **caractérisé en ce que** le caisson comprend des pièces de coin permettant l'arrimage dudit conteneur et/ou son empilage sur d'autres conteneurs en matière métallique, céramique ou plastique rigide

21. Dispositif selon l'une des revendications précédentes, **caractérisé en ce que** l'enveloppe étanche (13) comprend une partie principale (81) délimitant un volume interne de stockage des produits et une partie secondaire (82) pourvue d'intercalaires de compartimentation (83) solidaires de la partie principale, et définissant ensemble des compartiments de stockage de produits fragiles.

22. Dispositif selon la revendication 21, **caractérisé en ce que** les intercalaires sont constitués d'enveloppes étanches de stockage des gaz aspirés et compressés.

23. Dispositif selon la revendication 21 ou 22, **caractérisé en ce que** les intercalaires comprennent sur leurs faces internes délimitant un compartiment, une protection pour les produits fragiles, de type néoprène (84).

## Patentansprüche

1. Stapelbare, einen Container bildende Vorrichtung, die dem Transport von Produkten dient und folgendes umfasst:
- einen hauptsächlich aus Kunststoff hergestellten Teil, der einen Kasten (1) bildet, welcher einen Boden (3), vier Seitenwände (6, 8) und eine obere Wand abgrenzt, die hermetisch dicht miteinander verbunden sind,
- eine hermetisch dichte Abschlusstür (2) des Kastens, die mit dem Kasten, wenn sie auf diesem geschlossen wird, einen hermetisch dichten Behälter bildet,
- ein Absaug- und Kompressionssystem (11) für die im geschlossenen Behälter enthaltenen Gase,
- mindestens eine hermetisch dichte Hülle (13) zur Lagerung der angesaugten und komprimierten Gase, die mit dem Behälter fest verbunden ist und während des Transports einen Verkeilungswulst und beim Eintauchen des Containers in das Wasser einen Schwimmkörper bildet.

2. Vorrichtung nach Anspruch 1, in welcher das Absaug- und Kompressionssystem (11) für die im geschlossenen Behälter enthaltenen Gase im Innern des Behälters angeordnet sind.

3. Vorrichtung nach Anspruch 1 oder Anspruch 2, in welcher (13) die hermetisch dichte Hülle (113) in einem Bereich des Innenvolumens des Behälters befestigt ist, wo diese Hülle (13), nachdem sie aufgeblasen ist, als Verkeilungsmittel für die transportierte Produkte dienen kann.

4. Vorrichtung nach einem der vorhergehenden Ansprüche, in welcher die hermetisch dichte Hülle (13) abnehmbar im Innern des Behälters befestigt ist.

5. Vorrichtung nach einem der vorhergehenden Ansprüche, welche einen Analysator für die durch das Absaug- und Kompressionssystem (11) angesaugten Gase (90) umfasst.

6. Vorrichtung nach Anspruch 5, welche eine Einheit zum Vergleichen der Analyseergebnisse (90) der angesaugten Gase mit einer Datenbank umfasst, in welcher Analyseergebnisse erfasst sind, die unter ähnlichen Bedingungen bei Gaszusammensetzungen, wie zum Beispiel Betäubungsmitteln, die in Gegenwart von bekannten Kontrollelementen gemessen wurden, und/oder in menschlicher Gegenwart gemessen wurden.

7. Vorrichtung nach einem der vorhergehenden Ansprüche, in welcher die Rückwand (3) des Behälters eine eingebaute Präzisionswaage (92) umfasst.

8. Vorrichtung nach einem der vorhergehenden Ansprüche, in welcher der Kasten durch Formung erzielt wird.

9. Vorrichtung nach Anspruch 8, in welcher der Kasten:
- gebildet wird aus einem einzigen Stück durch Formung eines Materials in einer quaderförmigen Hohlform, oder
- gebildet wird durch das Zusammenfügen mehrerer Wände, die durch Formung eines Materials in einer flachen Form erzielt werden, welche zwischen den Seitenwänden und dem Boden hermetisch dichte Gelenke abgrenzt, die ein quaderförmiges Aufrichten und die anschließende hermetisch dichte Befestigung der angrenzenden, nicht durch ein hermetisch dichtes Gelenk verbundenen Wände ermöglichen.

10. Vorrichtung nach Anspruch 8 oder 9, in welcher der Behälter zumindest an seiner oberen Wand ein Solarpanel (14) umfasst.

11. Vorrichtung nach einem der vorhergehenden Ansprüche, welche Eckstücke (9) umfasst, die das Stapeln des Containers ermöglichen, und/oder einen Gewichtssensor (92), wie zum Beispiel einen Dehnungsmesser, und/oder ein Anschlusssystem für ein Solarpanel (93), wobei diese Stücke oder diese Dehnungsmesser oder dieses Anschlusssystem an oder auf den Behälter geformt sind.

12. Vorrichtung nach einem der vorhergehenden Ansprüche, in welcher die Tür erhalten wird durch Formung, und die Säulen (51), welche die Gelenkverbindung der Tür gewährleisten, an oder auf die Tür geformt sind.

13. Vorrichtung nach einem der vorhergehenden Ansprüche, welche eine äußere Zugangsklappe (50) zum Innenvolumen des Behälters umfasst.

14. Vorrichtung nach einem der vorhergehenden Ansprüche, **dadurch gekennzeichnet, dass** die Wände des Behälters aus Kunststoff oder einem Verbundstoff aus Kunststoff und Metall oder einem Ökomaterial aus Kunststoff bestehen.

15. Vorrichtung nach Anspruch 14, **dadurch gekennzeichnet, dass** der Kunststoff gebildet wird durch ein Polymer, wie zum Beispiel expandiertes Polystyrol oder Schaumstoff, Polyurethan, Polystyrol, Epoxidharz, Polyethylen mit hoher oder niedriger Dichte, Polyethylen mit ultrahoher Molmasse UHMPE, Polyphenylensulfid, PEEK oder Biopolymer.

16. Vorrichtung nach Anspruch 14 oder 15, **dadurch gekennzeichnet, dass** das Material, welches die Wände des Behälters bildet, verstärkt wird durch Glasfasern, Karbonfasern, Graphitfasern, durch ein Glasgewebe, ein Epoxidharzgewebe, durch Brom, mit UV-Schutzbehandlung.

17. Vorrichtung nach einem der vorhergehenden Ansprüche, **dadurch gekennzeichnet, dass** der Boden des Behälters aus Holz oder aus Verbundholz mit Kunststoffharz in Verbindung mit Holzfasern besteht.

18. Vorrichtung nach einem der vorhergehenden Ansprüche, **dadurch gekennzeichnet, dass** der hermetisch dichte Behälter eine metallische Bewehrung (52) umfasst, die aus Längs- und Querstreben (53, 54, 55) gebildet wird, auf welchen die Platten, welche die Wände des hermetisch dichten Behälters bilden, befestigt sind.

19. Vorrichtung nach einem der vorhergehenden Ansprüche, **dadurch gekennzeichnet, dass** der Behälter Scharniersäulen (51) der Tür aus Metall, Keramik oder Hartplastik umfasst.

20. Vorrichtung nach einem der vorhergehenden Ansprüche, **dadurch gekennzeichnet, dass** der Behälter Eckstücke umfasst, welche die Sicherung des besagten Containers und/oder seine Stapelung auf anderen Containern aus Metall, Keramik oder Hartplastik ermöglichen.

21. Vorrichtung nach einem der vorhergehenden Ansprüche, **dadurch gekennzeichnet, dass** die hermetisch dichte Hülle (13) einen Hauptteil (81) umfasst, der ein inneres Lagervolumen der Produkte abgrenzt, und einen zweiten Teil (82), der mit Zwischenlagen (83) zur Unterteilung versehen ist, die mit dem Hauptteil verbunden sind, und gemeinsam die Lagerbereiche für zerbrechliche Produkte abgrenzen.

22. Vorrichtung nach Anspruch 21, **dadurch gekennzeichnet, dass** die Zwischenlagen aus hermetisch dichten Hüllen zur Lagerung der angesaugten und komprimierten Gase bestehen.

23. Vorrichtung nach Anspruch 21 oder 22, **dadurch gekennzeichnet, dass** die Zwischenlagen an ihren, einen Lagerbereich abgrenzenden Innenseiten einen Schutz für die zerbrechlichen Produkte vom Typ Neopren (84) umfassen.

## Claims

1. A device forming a stackable container which can be used to transport products, comprising:
- a portion forming a crate (1) defining a base (3) and four side walls (6, 8) and a top wall, secured to one another in a sealed manner, mainly made of a plastic material,
- a door (2) for sealingly closing the crate, forming with the crate, when closed onto same, a sealed box;
- a system (11) for drawing and compressing the gases contained in the closed box;
- at least one tight casing (13) for storing the drawn and compressed gases, rigidly connected to the box and forming a bracing frame during transport and a flotation buoy when the container is immersed in water.

2. A device according to claim 1, wherein the system (11) for drawing and compressing the gases contained in the closed box is positioned inside the box.

3. A device according to claim 1 or claim 2, wherein the tight casing (13) is attached in an area of the internal volume of the box where the casing (13) once inflated, can be used as means for bracing the transported products.

4. A device according to one of the preceding claims, wherein the tight casing (13) is removably attached inside the box.

5. A device according to one of the preceding claims, comprising an analyzer (90) of the gases drawn by the gases drawing and compressing system (11).

6. A device according to claim 5, comprising a unit for comparing the results (90) of the analysis of the drawn gases with a database listing the analytical results obtained under similar conditions for gas compositions sampled in the presence of known control items such as narcotics, and/or a human presence.

7. A device according to one of the preceding claims, wherein the bottom wall (3) of the box comprises an integrated analytical balance (92).

8. A device according to one of the preceding claims, wherein the box is obtained by molding.

9. A device according to claim 8, wherein the box is:
- formed in one piece by molding a material into a hollow parallelepiped shape or
- formed by assembling several walls obtained by molding a material into a flat shape defining between the side walls and the base, tight hinges enabling shaping, such shaping resulting in a parallelepiped and then tight attachment of the adjacent walls which are not connected through a tight hinge.

10. A device according to claim 8 or 9, wherein at least the top wall of the box comprises a solar panel (14).

11. A device according to one of the preceding claims, comprising corner fittings (9) enabling the stacking of the container, and/or a weight sensor (92) such as a strain gauge, and/or a system for connecting a solar panel (93), with such fittings or gauges or such connection system being co-molded or over-molded with the box.

12. A device according to one of the preceding claims, wherein the door is obtained by molding, and door frames (51) ensuring the hinging of the door are co-molded or over-molded with the door.

13. A device according to one of the preceding claims, comprising an outer hatch (50) giving access to the internal volume of the box.

14. A device according to one of the preceding claims, **characterized in that** the walls of the box are made of plastic material or composite plastic metal materials or an environmentally-friendly plastic-based material.

15. A device according to claim 14, **characterized in that** the plastic material consists of a polymer such as expanded or foamed polystyrene, polyurethane, polystyrene, epoxy resin, low or high density polyethylene, ultrahigh molecular weight polyethylene UHMPE, polyphenylene sulfide, PEEK, or such as a biopolymer.

16. A device according to claim 14 or 15, **characterized in that** the material the box walls are made of is reinforced with glass fibers, carbon fibers, graphite fibers of an anti-UV treated woven glass fabric, an epoxy resin fabric, or with bromine.

17. A device according to one of the preceding claims, **characterized in that** the base of the box is made of wood or composite wood including a plastic resin combined with wood fibers.

18. A device according to one of the preceding claims, **characterized in that** the tight casing comprises a wire reinforcement (52) formed by beams and cross-members (53, 54, 55), on which panels forming the walls of the tight casing are attached.

19. A device according to one of the preceding claims, **characterized in that** the box comprises door frames (51) for hinging the door made of a metallic material, ceramic or rigid plastic.

20. A device according to one of the preceding claims, **characterized in that** the box comprises corner fittings for securing and/or stacking said container on other containers made of metallic material, ceramic or rigid plastic.

21. A device according to one of the preceding claims, **characterized in that** the tight casing (13) comprises a main portion (81) defining an internal volume for storing products and a secondary portion (82) provided with inserts for dividing the main portion into compartments (83) rigidly connected with the main portion, and defining together fragile products storage compartments.

22. A device according to claim 21, **characterized in that** the inserts consist of tight casings for storing the drawn and compressed gases.

23. A device according to claim 21 or 22, **characterized in that** the inserts comprise, on their inner faces defining a compartment, a protection for fragile products, such as neoprene (84).
